# EUROPÄISCHE PATENTSCHRIFT

(11) **EP 2 387 744 B1**
(45) Veröffentlichungstag und Bekanntmachung des Hinweises auf die Patenterteilung: **24.10.2018**
(21) Anmeldenummer: 10702019.0
(22) Anmeldetag: 07.01.2010
(51) Int. Cl.: G06F 3/042, G06F 3/033

(54) **VORRICHTUNG ZUR OPTISCHEN NAVIGATION**
OPTICAL NAVIGATION APPARATUS
APPAREIL DE NAVIGATION OPTIQUE

(30) Priorität: 19.01.2009 DE 102009005092
(43) Veröffentlichungstag der Anmeldung: 23.11.2011
(73) Patentinhaber: Fraunhofer-Gesellschaft zur Förderung der angewandten Forschung e.V., 80686 München (DE)
(72) Erfinder: DUPARRÉ, Jacques, 07745 Jena (DE); BRÜCKNER, Andreas, 07743 Jena (DE); WIPPERMANN, Frank, 98617 Meiningen (DE)
(74) Vertreter: Pfenning, Meinig & Partner mbB
(86) Internationale Anmeldenummer: PCT/EP2010/000045
(87) Internationale Veröffentlichungsnummer: WO 2010/081652

(56) Entgegenhaltungen:
- WO-A1-2009/033551
- GB-A- 2 400 714
- JP-A- 2003 283 932
- US-A1- 2004 084 610
- US-A1- 2006 033 114
- US-A1- 2007 109 272
- US-A1- 2007 215 793

## Beschreibung

Die Erfindung betrifft eine Vorrichtung zur optischen Navigation auf Basis einer Herstellung im Wafermaßstab, bei der sowohl der Beleuchtungspfad als auch die Abbildungsoptik auf einer gemeinsamen Trägerstruktur integriert sind. Verwendung finden die erfindungsgemäßen Vorrichtungen zur optischen Navigation zur Steuerung eines Cursors auf einem Bildausgabegerät oder im Bereich der Fingernavigation.

Bei optischen Navigationssensoren wird ein Flächenbereich der sog. Tracking-Surface durch eine Quelle für elektromagnetische Strahlung, z.B. eine LED oder eine Laserdiode, und entsprechender Strahlformungsoptik möglichst homogen beleuchtet. Anschließend wird mittels einer Objektivlinse entweder die beleuchtete Tracking-Surface direkt (im Falle der LED) oder das durch die Reflexion an der Tracking-Surface entstehende Specklemuster (im Falle der Laserdiode) auf einen digitalen Bildsensor abgebildet. Die Bildaufnahme geschieht in sehr schneller Abfolge (1500-6000 Bilder pro Sekunde) hintereinander. Nacheinander aufgenommene Bilder werden miteinander korreliert und die Verschiebung der Bilder untereinander wird anhand repräsentativer Strukturen von an der Tracking-Surface gestreuter oder gebeugter Strahlung als Maß für die Größe und Geschwindigkeit der Verschiebung des Eingabegerätes gegenüber der Tracking-Surface bzw. eines Referenzobjektes gegenüber dem Eingabegerät herangezogen. Dies wird wiederum in die Bewegung des Mauszeigers auf einem Display umgesetzt.

Eine Miniaturisierung eines solchen optischen Navigationssensors kann schrittweise in eine Miniaturisierung der Abbildungsoptik und eine Miniaturisierung der Beleuchtungsoptik unterteilt werden. Konsequenterweise müssen beide Optiken gemeinsam miniaturisiert werden, um eine größtmögliche Gesamtverkleinerung zu erreichen.

Für die alleinige Miniaturisierung der Abbildungsoptik sei die in der DE 10 2007 042 984 beschriebene mehrkanalige Anordnung angeführt.

Weiterhin sind einkanalige optische Anordnungen zur Beleuchtung wie auch zur Abbildung der Tracking-Surface bekannt. Diese erleiden jedoch durch die fortschreitende Miniaturisierung und die daraus resultierenden kurzen Schnittweiten entsprechende prinzipielle Nachteile. Die GB 2 400 714 A offenbart ein optisches Navigationsmodul gemäß dem Oberbegriff des Anspruchs 1. Die US 2007/215793 A1 und die WO 2009/033551 A1 offenbaren weitere bekannte optische Navigationsmodule. Probleme entstehen nun bei gegebener Diagonale des Bildsensors bei der Miniaturisierung des optischen Aufbaus, da eine Verkürzung der Baulänge für die äußeren Bildbereiche sehr große Winkel relativ zur optischen Achse der Optik nach sich zieht (umgekehrte Abbildung) und dadurch die Auflösung der Abbildung aufgrund von off-axis Aberrationen und die Helligkeit aufgrund der natürlichen Vignettierung am Bildrand stark verringert wird.

Im gleichen Maße stellt die Verkürzung des bestehenden Aufbaus eine Herausforderung für den Beleuchtungspfad dar, da eine Verkürzung des Gesamtaufbaus nicht nur eine Verkürzung der die Tracking-Surface abbildenden Optik bedeutet, sondern auch des Objektabstandes. Durch einen geringeren Objektabstand würde bei momentaner Konfiguration die Beleuchtungsstrahlung in einem sehr flachen Winkel auf die Tracking-Surface einstrahlen, was zu einer inhomogenen Ausleuchtung und verringerter Effizienz (nutzbare Strahlung/emittierte Strahlung) führt. Des Weiteren ist eine große Anzahl von Reflexionen der Beleuchtungsstrahlung nötig, was zu erhöhter Streuung und Falschlicht führt und somit den Bildkontrast verringert. Ferner begrenzt die Trennung der Abbildungs- und Beleuchtungsoptik eine weitere Miniaturisierung.

Ausgehend hiervon war es Aufgabe der vorliegenden Erfindung, eine Vorrichtung zur optischen Navigation bereitzustellen, die die aus dem Stand der Technik bekannten Nachteile beseitigt und eine miniaturisierte Vorrichtung darstellt, die zum einen eine homogene Beleuchtung des abzubildenden Objekts und eine effiziente Abbildung auf den Bildsensor ermöglicht.

Diese Aufgabe wird durch die Vorrichtung zur optischen Navigation mit den Merkmalen des Anspruchs 1 und das Eingabegerät mit den Merkmalen des Anspruchs 13 gelöst. In Anspruch 14 werden erfindungsgemäße Verwendungen angegeben. Die weiteren abhängigen Ansprüche zeigen vorteilhafte Weiterbildungen auf.

Erfindungsgemäß wird eine Vorrichtung zur optischen Navigation bereitgestellt, die in Wafer-Technologie hergestellt ist und folgende Komponenten aufweist:
a) ein Bildsensorarray mit einer Vielzahl von arrayartig angeordneten Bildsensoreinheiten mit jeweils mindestens einer lichtempfindlichen Fläche,
b) mindestens ein dem Bildsensorarray zugeordnetes und zwischen einem abzubildenden Objekt und dem Bildsensorarray angeordnetes Mikrolinsenarray, wobei jeder Bildsensoreinheit mindestens eine Mikrolinse zugeordnet ist sowie
c) mindestens eine Strahlungsquelle mit mindestens einer zugehörigen Strahlformungsoptik.

Wesentliches Merkmal dieser Vorrichtung ist es, dass das Bildsensorarray und die mindestens eine Strahlungsquelle gemeinsam auf derselben Trägerstruktur sowie mindestens ein Mikrolinsenarray und mindestens eine Strahlformungsoptik gemeinsam auf demselben optisch transparenten Substrat angeordnet sind.

Ferner weist die erfindungsgemäße Vorrichtung mindestens eine Aperturblendenlage auf, die aus einem absorbierenden oder einem zumindest einseitig reflektierenden Material besteht, zwischen dem optisch transparenten Substrat und dem Mikrolinsenarray bzw. der Strahlformungsoptik angeordnet ist, wobei die Aperturblendenlage im Bereich des Mikrolinsenarrays das Eindringen von Strahlung zwischen den Mikrolinsen des Mikrolinsenarrays verhindert und im Bereich der Strahlformungsoptik eine Einschränkung des Abstrahlwinkels der aus der Strahlungsquelle austretenden Strahlung ermöglicht,
wobei auf der dem Mikrolinsenarray abgewandten Seite des optisch transparenten Substrats mindestens eine Blendenlage angeordnet ist, die aus einem absorbierenden oder einem zumindest einseitig reflektierenden Material besteht, wobei die mindestens eine Blendenlage im Bereich des Mikrolinsenarrays ein optisches Übersprechen zwischen einzelnen optischen Kanälen des Bild-sensorarrays unterdrückt und im Bereich der Strahlformungsoptik verhindert, dass Strahlung der Strahlungsquelle unmittelbar auf lichtempfindliche Flächen der Bildsensoreinheiten gelangt.

Die erfindungsgemäße Vorrichtung zeichnet sich im Wesentlichen dadurch aus, dass
- die mikrooptische Beleuchtungs- und Abbildungsoptik auf einer gemeinsamen Trägerstruktur angeordnet sind,
- eine ein- oder mehrkanalige Optik-Anordnung für den Beleuchtungsstrang in die Vorrichtung integriert ist,
- eine mehrkanalige Optik-Anordnung im Abbildungsstrang vorliegt und
- eine Integration der mindestens einen Strahlungsquelle auf derselben elektronischen Leiterplatte oder sogar auf demselben Halbleitersubstratausschnitt wie das Bildsensorarray.

Das Ergebnis dieser Maßnahme ist eine größtmögliche Miniaturisierung des optischen Navigationssensors. Miniaturisierung bedeutet hier die Verkleinerung des Gesamtvolumens aber vor allem die Realisierung eines sehr dünnen Aufbaus (Aufbauhöhe kleiner 2 mm). Des Weiteren kann durch die Verwendung von mikrooptischen Herstellungsmethoden im Wafermaßstab, u.a. die parallele Erzeugung von abbildenden Mikrolinsenarrays und strahlformender Optik auf demselben Substratträger, bei entsprechender Stückzahl eine Reduktion der Herstellungskosten erreicht werden. Ein durch die Miniaturisierung erreichter kürzerer Beleuchtungsabstand und der u.U. zusätzlich größere Einfallswinkel sorgen für eine höhere Beleuchtungseffizienz, was somit zu einem größeren Signal-Rausch-Verhältnis oder, bei gedimmter Lichtquelle, zu geringerem Stromverbrauch führt. Letzteres ist vor allem in Bezug auf den Einsatz in tragbaren Endgeräten relevant.

Durch die Anordnung von Strahlungsquelle(n) und Detektoren auf einer gemeinsamen Trägerstruktur wird von vornherein eine kleine Grundfläche des optischen Navigationssensors erreicht und es wird völlig neuen substratbasierten Assembliermethoden der Weg bereitet, u.a. durch eine deutlich erhöhte Präzision der relativen Positionen von Beleuchtungsquelle und Bildsensorarray sowie deren Anordnung mehr oder weniger in einer Ebene. Ein mikrooptisches Modul, d.h. Mikrolinsenarray(s) mit einer oder mehreren zusätzlichen Komponenten, die sich in mindestens einer Eigenschaft, wie z.B. Krümmungsradius, lateralem Durchmesser, Pfeilhöhe, Brennweite, Oberflächenprofil, von den Mikrolinsen unterscheiden, wird auf diese gemeinsame Trägerstruktur aufgesetzt, um einerseits die Beleuchtung der Tracking-Surface und andererseits die Abbildung des an dieser gestreuten oder gebeugten Beleuchtungslichtes zu gewährleisten.

Abbildungsseitig werden die zur Bildsensorkoordinate korrespondierenden Objektteile nicht schief bzw. diagonal durch die Optik übertragen, wie es bei herkömmlichen optischen Navigationssensoren der Fall ist, sondern senkrecht. Korrespondierende Objekt- und Bildteile liegen sich direkt gegenüber, so dass keine umgekehrte, sondern eine aufrechte Abbildung erzeugt wird. Hier wird jeder Objektteil im Wesentlichen "onaxis", also mit kleinem Einfallswinkel zur jeweiligen optischen Achse, übertragen. Dazu ist eine arrayhafte Abbildung notwendig, bei der jedem mindestens einen Bildpixel seine mindestens eine eigene Mikrolinse zugeordnet wird.

Der Beleuchtungsstrang zeichnet sich vorzugsweise durch folgende Merkmale aus, wobei erfindungsgemäße Merkmale in Anspruch 1 aufgeführt sind:
• Der Beleuchtungsstrang befindet sich mit der abbildenden Optik auf derselben optisch transparenten Trägerstruktur, z.B. einem Ausschnitt aus Glassubstrat oder Kunststoffabstandsschicht, und besteht aus dem gleichen Material, insbesondere Kunststoff, ORMOCER = anorganisch-organisches Copolymer, Glas oder deren Verbunde.
• Der Beleuchtungsstrang wirkt refraktiv und/oder reflektiv und/oder diffraktiv, um die elektromagnetische Strahlung der Strahlungsquelle(n) möglichst homogen auf die von der abbildenden Optik beobachteten Bereiche der Tracking-Surface zu verteilen.
• Einer einzelnen Strahlungsquelle kann eine mehrkanalige Beleuchtungsoptik zugeordnet sein, d.h. die Beleuchtungsoptik kann auch als Array bzw. Anordnung von gleichförmigen oder unterschiedlichen optischen Bauelementen ausgeprägt sein.
• Im Falle mehrerer Strahlungsquellen kann einer der Quellen oder auch einer Anzahl von Strahlungsquellen eine mehrkanalige Beleuchtungsoptik zugeordnet sein.
• Im Falle mehrerer Strahlungsquellen können die von den einzelnen Kanälen der Beleuchtungsoptik beleuchteten Bereiche der Tracking-Surface disjunkt sein oder einander zumindest teilweise überlappen.
• Zwischen der Beleuchtungsoptik und der optisch transparenten Trägerstruktur kann sich eine Aperturblende bzw. eine Aperturblendenanordnung in geringem axialem Abstand zur Beleuchtungsoptik befinden. Es handelt sich dabei um dieselbe Schicht, die auch für die abbildende Optik eine Aperturblendenanordnung enthalten kann.
• Die Aperturblendenanordnung besteht aus einem absorbierenden Material, z.B. Black-Matrix-Polymer, und/oder einem zumindest einseitig reflektierenden Material, z.B. einem Metall, wie Titan, Chrom oder Schwarzchrom oder nanostrukturiertes Silizium (Black Silicon).
• Zwischen der Beleuchtungsoptik mit zugeordneter Aperturblendenanordnung auf der optisch transparenten Trägerstruktur und dem Halbleitersubstratausschnitt kann sich mindestens eine Blende bzw. Blendenanordnung befinden. Es handelt sich um dieselbe Schicht, in der auch im Abbildungsstrang eine Blendenanordnung ausgeprägt sein kann. Hier dient die Blende bzw. Blendenanordnung zur Einschränkung des Winkelspektrums der elektromagnetischen Strahlung der Strahlungsquelle und insbesondere verhindert diese, dass Beleuchtungsstrahlung direkt auf das Bildsensorarray gelangt.
• Die Blendenanordnung besteht aus einem absorbierenden Material, z.B. einem Black-Matrix-Polymer, und/oder einem zumindest einseitig reflektierenden Material, z.B. einem Metall, wie Titan, Chrom oder Schwarzchrom oder nanostrukturiertes Silizium (Black Silicon).
• Zwischen dem optisch transparenten Träger mit mindestens einer Blendenanordnung kann sich eine zweite Strahlformungsoptik, z.B. eine Mikrolinse, aus einem optisch transparenten Material, insbesondere Kunststoff, ORMOCER = anorganisch-organisches Co-Polymer und/oder Glas, befinden.
• Diese zweite Strahlformungsoptik kann refraktiv und/oder reflektiv und/oder diffraktiv wirken, um die elektromagnetische Strahlung der Strahlungsquelle(n) zu kollimieren und/oder abzulenken, so dass sie im Zusammenwirken mit der Beleuchtungsoptik möglichst homogen auf der Tracking-Surface verteilt wird.
• Einer einzelnen Strahlungsquelle kann eine mehrkanalige, zweite Strahlformungsoptik zugeordnet sein, d.h. die zweite Strahlformungsoptik kann auch als Array oder Anordnung von gleichförmigen oder unterschiedlichen optischen Bauelementen, z.B. als Mikrolinsenarray, ausgeprägt sein.
• Speziell kann aus dem Zusammenwirken einer als Array ausgebildeten Beleuchtungsoptik mit einer als Array ausgebildeten zweiten Strahlformungsoptik mit angepasstem axialem Abstand und evtl. lateralem Versatz der Zentren von der Beleuchtungsoptik und der zweiten Strahlformungsoptik ein Aufbau zur Homogenisierung der Beleuchtungsstrahlung ähnlich dem Prinzip des Wabenkondensors realisiert werden.
• Im Falle mehrerer Strahlungsquellen kann einer der Strahlungsquellen oder auch einer Anzahl von Strahlungsquellen eine mehrkanalige, zweite Strahlformungsoptik zugeordnet sein.
• Die zweite Strahlformungsoptik kann auch durch eine Abstandshalterschicht aus optisch transparentem Material, insbesondere Kunststoff, ORMOCER = anorganisch-organischem Co-Polymer oder Glas, ersetzt sein. Im Falle einer elektrischen Kontaktierung des Bildsensors und/oder der Strahlungsquelle(n) durch Bonddrähte ist diese Abstandshalterschicht von der Abstandshalterschicht des Abbildungsstranges lateral getrennt, befindet sich aber in derselben axialen Lage. Falls eine elektrische Rückseitenkontaktierung (z.B. "through-Silicon VI-As") des Bildsensors und/oder der Quelle(n) vorhanden ist, kann es sich um dieselbe, lateral verbundene Abstandshalterschicht handeln bzw. es kann auf eine laterale Strukturierung der Abstandshalterschicht verzichtet werden.
• Auf der Rückseite (bild- oder quellenseitig) der zweiten Strahlformungsoptik bzw. Abstandshalterschicht kann sich eine der jeweiligen Strahlungsquelle zugeordnete Blende bzw. Blendenanordnung befinden. Diese dient der weiteren Einschränkung des Winkelspektrums der elektromagnetischen Strahlung der Strahlungsquelle und speziell zur Verhinderung, dass Strahlung direkt von den Strahlungsquellen auf den Bildsensor fällt. Diese Blende besteht aus einem absorbierenden Material, z.B. einem Black-Matrix-Polymer, und/oder einem zumindest einseitig reflektierenden Material, z.B. einem Metall, wie Titan, Chrom oder Schwarzchrom oder nanostrukturiertes Silizium (Black Silicon).
• Die Abstandshalterschicht der abbildenden Optik kann sich in ihrer lateralen Ausdehnung und Form der Berandung und des Oberflächenprofils von der zugeordneten Schicht der Beleuchtungsoptik unterscheiden, indem diese z.B. als eine weitere Strahlformungsoptik ausgeprägt ist.
• Die von der Strahlungsquelle emittierte elektromagnetische Strahlung wird durch die Beleuchtungsoptik evtl. im Zusammenspiel mit der zweiten Strahlformungsoptik auf die von der Abbildungsoptik beobachteten Bereiche der Tracking-Surface verteilt.
• Das Beleuchtungsschema wird bevorzugt so gestaltet, dass die Bereiche der Tracking-Surface möglichst homogen beleuchtet werden, d.h. die Strahlungsintensität der Beleuchtung sollte über die Fläche der Tracking-Surface möglichst wenig variieren.

Alle erwähnten Beleuchtungsoptiken, Blendenlagen und Träger- bzw. Abstandshalterschichten haben die Eigenschaft, dass sie mit den jeweiligen Optiken, Blendenanordnungen, Träger- bzw. Abstandshalterschichten der mehrkanaligen Abbildungsoptik lateral in einer Schicht liegen bzw. als gemeinsame Schicht in der abbildenden und beleuchtenden Optik ausgeprägt sind. Das bedeutet, dass die Blendenanordnungen der abbildenden Optik aus demselben Material beschaffen sind, sich aber in ihrer lateralen Struktur bzw. Eigenschaften, wie z.B. Mittenabstand, Öffnungsdurchmesser, Form der Berandung, unterscheiden können.

Die Abbildungsoptik zeichnet sich vorzugsweise durch die folgenden Merkmale aus, wobei erfindungsgemäße Merkmale in Anspruch 1 aufgeführt sind:
- Jeder Mikrolinse des Mikrolinsenarrays ist mindestens ein Detektor (Pixel) zugeordnet.
- Jede Mikrolinse bildet einen Bereich der Tracking-Surface auf diese mindestens eine Bildsensoreinheit ab, die mindestens so groß ist wie der laterale Abstand der Mikrolinsen. Dies sorgt für eine lückenlose Abtastung der Tracking-Surface, woraus eine 1:1-Abbildung resultiert, während innerhalb eines Kanals der Objektbereich verkleinert auf einen Pixel abgebildet wird.
- Die mehrkanalige Abbildungsoptik kann geneigte (zum Rande hin wachsende) optische Achsen besitzen. Global liegt dann keine 1:1-Abbildung mehr vor, da das abgebildete Objektfeld größer als der Bildsensor ist. In diesem Fall muss sichergestellt werden, dass in gewünschtem Arbeitsabstand die den einzelnen optischen Kanäle zugeordneten Objektbereiche gerade aneinander anschließen, d.h. die Kantenlänge des jedem optischen Kanal zugeordneten Objektbereiches ist dann größer als der Abstand der Mikrolinsen.
- Der Objektabstand beträgt für die Anwendung als optische Maus von 0,1 bis 1 mm und allgemein als optischer Navigationssensor von 0,1 mm bis einige Meter.
- Die Abbildungsoptik besteht aus mindestens einem Mikrolinsenarray mit zugeordneter Aperturblendenanordnung in geringem axialen Abstand zur optischen Linsenfläche.
- Die Aperturblendenanordnung besitzt analoge Eigenschaften wie die Aperturblendenanordnung des Beleuchtungsstranges, da es sich um dieselbe Schicht handelt, jedoch ist im Allgemeinen mindestens eine der lateralen Eigenschaften, wie z.B. Öffnungsdurchmesser, Form der Berandung, zwischen den Aperturblenden, die der Beleuchtungsoptik und jenen, die der abbildenden Optik zugeordnet sind, verschieden.
- Zwischen dem mindestens einen Mikrolinsenarray mit dessen zugeordneter Aperturblendenanordnung und dem Bildsensorarray auf einem Halbleitersubstratausschnitt befindet sich mindestens eine optisch transparente Trägerstruktur, z.B. ein Ausschnitt aus Glas-Substrat oder Kunststoff-Abstandsschicht.
- Zwischen Trägerstruktur und Detektorenarray kann sich mindestens eine Blendenanordnung zur Unterdrückung von Störlicht sowie optischem Übersprechen, d.h. vom Objekt gestreute und in einem optischen Kanal erfasste Strahlung, die unerwünscht auf einen Detektor eines anderen Abbildungskanals abgebildet wird, befinden. Optional befindet sich auf dieser Blendenanordnung bildseitig eine Abstandshalterschicht aus einem optisch transparenten Material, z.B. Kunststoff, ORMOCER= anorganisch-organischem Co-Polymer oder Glas. Die bildseitige Abstandshalterschicht kann, z.B. im Falle von elektrischer Kontaktierung des Bildsensors und/oder der Strahlungsquelle(n), lateral strukturiert ausgeprägt sein.
- Auf der Rückseite der Abstandshalterschicht kann sich eine Blendenanordnung direkt vor den Detektoren befinden, die zur Einschränkung der photoaktiven Fläche der Detektorelemente und somit der Erhöhung der Auflösung dient. Die Blendenanordnung besteht aus einem absorbierenden Material, z.B. einem Black-Matrix-Polymer, und/oder einem zumindest einseitig reflektierenden Material, z.B. einem Metall, wie Titan, Chrom, Schwarzchrom oder nanostrukturiertes Silizium (Black Silicon).
- Die Abbildungsoptik ist bildseitig zur Bildaufnahme direkt mit einem Detektorenarray (Bildsensor Halbleiterausschnitt) verbunden.
- Strahlungsquelle und Bildsensor befinden sich mindestens auf derselben Leiterplatte (PCB) bzw. sogar auf demselben Halbleiterausschnitt.

Obwohl die Aperturblenden- und andere Blendenanordnungen der Beleuchtungs- bzw. Abbildungsoptik in derselben Schicht liegen, können sie in beiden oder auch nur in dem einen oder dem anderen Strang bzw. in keinem von beiden ausgebildet sein.

Bei der erfindungsgemäßen Vorrichtung bildet die einzelne Mikrolinse ein umgekehrtes Bild vom ihr gegenüberliegenden Objektbereich ab. Da die Mikrolinse aber nur auf einen Pixel abbildet, entspricht jeder einer Linse zugeordneter Objektteilbereich genau einem Bildpunkt. Die aufgenommenen Pixelwerte liefern durch einfaches Aneinanderreihen das entsprechend der Zahl der Linsen im Linsenarray aufgelöste Bild der Tracking-Surface.

Am Objektrand übertragen nun jeweils andere Kanäle den Objektpunkt, als in der Objektmitte, es findet sich durch die arrayhafte Fortsetzung aber stets ein Kanal, der den Objektpunkt unter nahezu senkrechtem Einfall überträgt.

Durch eine entsprechend gewählte Zahl und axiale Anordnung von Blendenarrays und entsprechend gewählte Schichtdicken transparenter Zwischenschichten wird ein Übersprechen benachbarter Kanäle, was ansonsten zu Falschlicht und damit zur Reduktion des Signal-Rausch-Verhältnisses führte, weitestgehend unterdrückt. Gleichzeitig soll die Größe und Position der Öffnung allerdings so sein, dass die Vignettierung des gewünschten Nutzlichtes des einzelnen Kanals minimal ist.

Bei dem Einsatz von Blendenarrays ist eine genaue laterale Justierung des optischen Kanals (der Mikrolinse) relativ zu dem oder den korrespondierenden Detektorpixeln notwendig. Das bedeutet auch, dass die Anordnung der Linsen quadratisch bzw. rechteckig sein muss, wenn die Anordnung der Detektorpixel dementsprechend ist. In dieser Variante sollten die Detektorpixel deutlich kleiner sein, als der Kanalabstand, um eine sinnvolle Auflösung zu erzielen, was zu einem reduzierten Füllfaktor der Detektorpixel in der Bildsensormatrix und einer vergleichsweise reduzierten Lichtstärke führt. Sinnvollerweise sollten dafür nicht dicht gepackte große Photodioden mit kleinen Blenden abgedeckt werden, sondern die Photodioden sollten von vornherein entsprechend klein sein, was auch für das Signal-Rausch-Verhältnis vorteilhaft ist, und der Platz zwischen den Photodioden sollte für elektronische Schaltkreise zur Bildauslese, Signalverstärkung, Erhöhung der Empfindlichkeit, Verbesserung des Signal-Rausch-Verhältnis ("correlated double sampling") oder insbesondere Bildvorverarbeitung (Kontrastberechnung, Messung der Kontrastrichtung, Bestimmung der Bildverschiebung (Korrelation), Detektion von optischem Fluss etc.) genutzt werden.

Die erfindungsgemäße Vorrichtung lässt sich in Wafer-Technologie herstellen. Dies umfasst die Verbindung mit Bildsensor (Verkleben), UV-Replikation von Polymer auf Glas, Heißprägen, schichtweiser lithographischer Aufbau auf Bildsensor, Vereinzelung mittels Wafersäge, vorteilhafterweise erst nach Fertigstellung des kompletten Schichtaufbaus. Nach Vereinzelung der Module (nur Optik oder gemeinsam mit Bildsensor) müssen die Seiten (mit absorbierendem Polymer) geschwärzt werden, um die seitliche Einkopplung von Falschlicht durch die Substratstirnflächen zu vermeiden. Bei Waferscaleverbindung mit dem Bildsensor ist Rückseitenkontaktierung (z.B. through silicon - Vias) vorteilhaft, da man ansonsten die Optikbereiche kleiner aussägen muss, als die Bereiche des Bildsensors, um die Bondingpads noch zur Kontaktierung frei zu halten. Durch podestartige Strukturierung der Spacerschicht auf den aktiven Bereich des Bildsensors kann man dann aber verhindern, dass beim Sägen der Optik der Bildsensorwafer vorderseitig verletzt wird.

Anhand der nachfolgenden Figuren soll der erfindungsgemäße Gegenstand näher erläutert werden, ohne diesen auf die hier gezeigten speziellen Ausführungsformen einschränken zu wollen.
Fig. 1 zeigt die Optik einer erfindungsgemäßen Vorrichtung mit lateral abgesetzter Lichtquelle auf einer gemeinsamen Leiterplatte.
Fig. 2 zeigt die Optik einer erfindungsgemäßen Vorrichtung zur optischen Fingernavigation mit lateral abgesetzter Lichtquelle auf einer gemeinsamen Leiterplatte.
Fig. 3 zeigt die Optik einer erfindungsgemäßen Vorrichtung mit multiplen lateral abgesetzten Lichtquellen auf einer gemeinsamen Leiterplatte.
Fig. 4 zeigt die Optik einer erfindungsgemäßen Vorrichtung zur optischen Fingernavigation mit lateral abgesetzter Lichtquelle auf einer gemeinsamen Leiterplatte und mit einem zusätzlich für den Beleuchtungsstrang genutzten Deckglas.
Fig. 5 zeigt eine kombinierte Beleuchtungs- und Abbildungsoptik der Vorrichtung mit lateral abgesetzter Lichtquelle auf einer gemeinsamen Leiterplatte.
Fig. 6 zeigt die Optik einer erfindungsgemäßen Vorrichtung mit auf dem Halbleitersubstrat des Bildsensors integrierter Lichtquelle.
Fig. 7 zeigt die Optik einer erfindungsgemäßen Vorrichtung mit auf dem Halbleitersubstrat des Bildsensors integrierter, flächig-ausgeprägter Lichtquelle.
Fig. 8a zeigt eine schematische Aufsicht auf eine flächige Ausprägung der Beleuchtungsquellen und Beleuchtungsoptik und Fig. 8b zeigt den gleichen schematischen Aufbau mit mikro-strukturierter, d.h. pixelierter, elektrisch einzeln ansteuerbarer Beleuchtungsquelle.
Fig. 9 zeigt die Optik einer erfindungsgemäßen Vorrichtung mit auf dem Halbleitersubstrat des Bildsensors in Zwischenpositionen zwischen den Abbildungskanälen integrierten multiplen, mikro-strukturierten Lichtquellen.
Fig. 10 zeigt die Optik einer erfindungsgemäßen Vorrichtung mit zueinander geneigten optischen Achsen und auf dem Halbleitersubstrat des Bildsensors in Zwischenpositionen zwischen den Abbildungskanälen integrierten multiplen, mikro-strukturierten Lichtquellen.
Fig. 11 zeigt die Optik einer Vorrichtung unter Verwendung einer arrayartigen Anordnung von Mikroteleskopen, d.h. drei hintereinander liegenden Mikrolinsen in einem Kanal mit zweistufiger Abbildung inkl. Zwischenbild, für den Abbildungsstrang und einer einzelnen Strahlformungsoptik im Beleuchtungsstrang.
Fig. 12 zeigt die Optik einer Vorrichtung unter Verwendung einer arrayartigen Anordnung von Mikroteleskopen, d.h. drei hintereinander liegende Mikrolinsen in einem Kanal mit zweistufiger Abbildung inkl. Zwischenbild, für den Abbildungsstrang und einer mehrkanaligen Strahlformungsoptik mit bis zu drei hintereinander liegenden Mikrolinsenarrays im Beleuchtungsstrang.
Fig. 13 zeigt eine Aufsicht der erfindungsgemäßen Vorrichtung gemäß den Figuren 7 bis 9 anhand von Höhenprofilen der einzelnen Mikrolinsen.

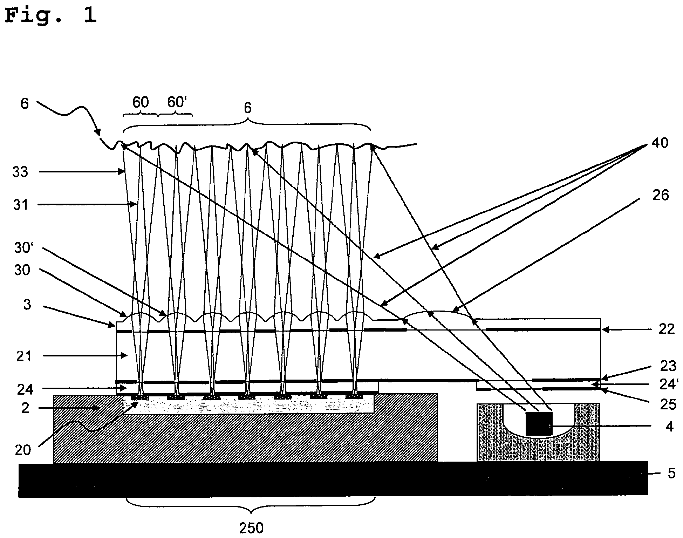

Fig. 1 zeigt eine erfindungsgemäße Variante, bei der sich der Halbleiter Bildsensor 2 mit Detektorpixeln 20 und Lichtquelle 4 (evtl. inklusive Reflektor) auf einem gemeinsamen elektronischen Träger (PCB) 5 befindet, über den die Stromversorgung und der Datentransfer abläuft. Darauf wird die Optik, bestehend aus dem Mikrolinsenarray 3 und der peripher befindlichen Strahlformungsoptik 26 auf dem gemeinsamen transparenten Träger 21 positioniert. Die Oberfläche des Bildsensors 2 dient dabei als mechanische Referenz (Optik befindet sich in direktem Kontakt mit diesem). Das Licht der Strahlungsquelle 4 wird durch die Beleuchtungsoptik 26 (optional im Zusammenspiel mit der Strahlformungsoptik 24' und/oder evtl. dem Reflektor der gehäusten Lichtquelle) auf einem definierten Bereich der Tracking-Surface 6 verteilt. Das Licht (gezeigt sind Randstrahlen 40) wird dabei möglichst homogen auf dem Bereich der Tracking-Surface verteilt. Durch den Versatz der Beleuchtungsoptik 26, 24' zur Mitte der Quelle 4 kann eine Strahlablenkung in Richtung des beobachteten Bereiches der Tracking-Surface 6 erreicht werden. Der dadurch entstehende flache Einstrahlwinkel erzeugt auch bei inkohärenter Beleuchtung, z.B. LED, ausreichend Kontrast bei der Streuung des Lichts an der Mikrostruktur der Oberfläche.

Abbildungsseitig ist jedem Pixel der Detektorenanordnung 20 des Bildsensors 2 eine eigene Mikrolinse aus dem Mikrolinsenarray 3 zugeordnet, die einen Objektbereich 60 auf ihn abbildet, dessen Kantenlänge genauso groß ist, wie der Abstand der Mikrolinsen (wichtig für Objektfeldanschluss und somit für eine vollständige Abtastung der Tracking-Surface). Daraus resultiert global eine 1:1-Abbildung, während innerhalb eines Kanals der Objektbereich verkleinert auf einen Pixel abgebildet wird. Der beobachtete Bereich der Tracking-Surface 6 besitzt also mindestens die gleiche Ausdehnung wie die Detektorenanordnung 250. Die jeweiligen Randstrahlen 33, die vom Rand des einer Mikrolinse 30 (bzw. 30' für die Nachbarlinse) zugeordneten Bereiches 60 (bzw. 60') der Tracking-Surface reflektiert werden, werden auf den Rand des zugeordneten Pixels abgebildet. Während die Mitte des Bereiches (ersichtlich in Rot 31) auf die Mitte des Pixels abgebildet wird. Der optisch transparente Träger 21 dient einerseits als mechanischer Träger für die mikrooptischen Bauelemente 3, 26 und stellt anderseits sicher, dass sich die Detektoren 20 in einem entsprechenden axialen Abstand zu dem Mikrolinsenarray 3 befinden, so dass diese eine scharf fokussierte Abbildung des jeweiligen Objektbereiches 60 bzw. 60' auf den jeweils zugeordneten Detektor erzielen.

Die Aperturblendenanordnung 22 verhindert abbildungsseitig das Eindringen von Licht in den Bereichen zwischen den einzelnen Linsen (30, 30' usw.) des Mikrolinsenarrays 3. In ähnlichem Maße verhindert die A-perturblende im Beleuchtungsstrang, dass Licht von der Quelle 4 in eine ungewollte Richtung (z.B. direkt auf die Detektoren des Bildsensors oder von hinten auf das Mikrolinsenarray) abgestrahlt wird (Einschränkung des Abstrahlwinkels).

Die mindestens eine weitere Blendenanordnung 23 dient abbildungsseitig zur Unterdrückung von Falsch- und Störlicht, wie es z.B. durch optisches Übersprechen verursacht wird. Beleuchtungsseitig dient diese zur Verhinderung, dass Licht direkt von der Quelle 4 auf die Detektoren des Bildsensors gelangt. Optional kann der Blendenanordnung 23 eine Abstandshalterschicht 24 folgen, welche für die Aufbau- und Verbindungstechnik bei der Waferscale-Montage bedeutend ist. Durch sie werden Hohlräume zwischen Sensorwafer und Optikwafer erzeugt, unter denen sich die elektrischen Kontaktpads des Sensors (und evtl. auch der Beleuchtungsquellen) befinden. Es kann dann zunächst der Optikwafer gesägt werden, um die Hohlräume und die darunter liegenden Pads von vorne zugänglich zu machen, ohne den Sensorwafer zu beschädigen. Liegt jedoch eine Rückseitenkontaktierung (z.B. "through-Silicon VIAs") des Bildsensors und/oder der Lichtquelle(n) vor, werden diese Kavitäten nicht benötigt, und die Abstandshalterschichten 24 und 24' können dieselbe, lateral verbundene Abstandshalterschicht darstellen bzw. eine laterale Strukturierung der Abstandshalterschicht ist nicht notwendig.

Auf der Rückseite der Abstandshalterschicht 24 kann abbildungsseitig eine Blendenanordnung 25 dazu verwendet werden, die photoaktive Fläche der einzelnen Detektoren 20 weiter einzuschränken, um damit das Auflösungsvermögen zu erhöhen. Die Blendenanordnung 25 ist nicht nötig, wenn die Detektorpixel klein sind. Beleuchtungsseitig kann die Blende bzw. Blendenanordnung 25 evtl. ebenfalls notwendig sein, um das Winkelspektrum der elektromagnetischen Strahlung der Quelle 4 einzuschränken, insbesondere speziell um zu verhindern, dass Licht von der Quelle direkt auf die Detektoren des Bildsensors gelangt.

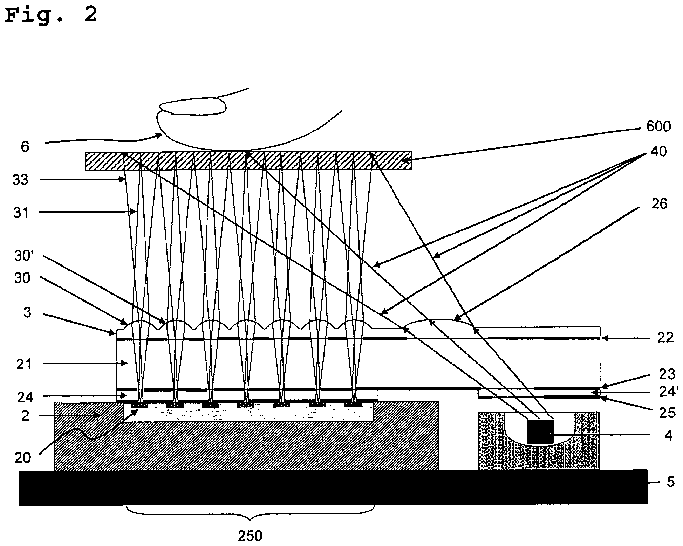

Alternativ (s. Fig. 2) kann der menschliche Finger als Tracking-Surface 6 dienen, so dass durch den optischen Navigationssensor die Bewegung des Fingers in eine Bewegung des Cursors umgewandelt wird. Hier ist ein dünnes, optisch transparentes Schutzglas 600 als Auflage für den Finger und zum Schutz des optischen Navigationssensors vor Verunreinigungen notwendig. Dieses wird zwischen Mikrolinsenarray 3 und deren Fokusebene auf der Tracking-Surface 6 positioniert.

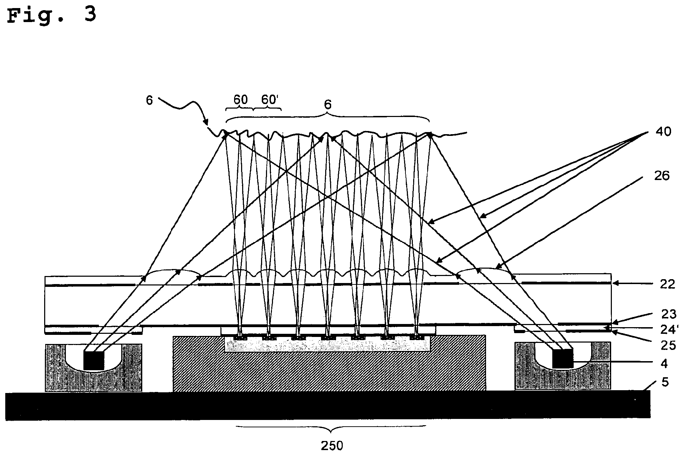

Zur Erhöhung der Beleuchtungsstärke und der Ausleuchtungshomogenität sind auch Ausführungsformen mit multiplen Quellen verwendbar, wie sie z.B. in Fig. 3 dargestellt sind. Diese können auch in einer zweidimensionalen Anordnung auf dem Träger PCB 5 verteilt sein.

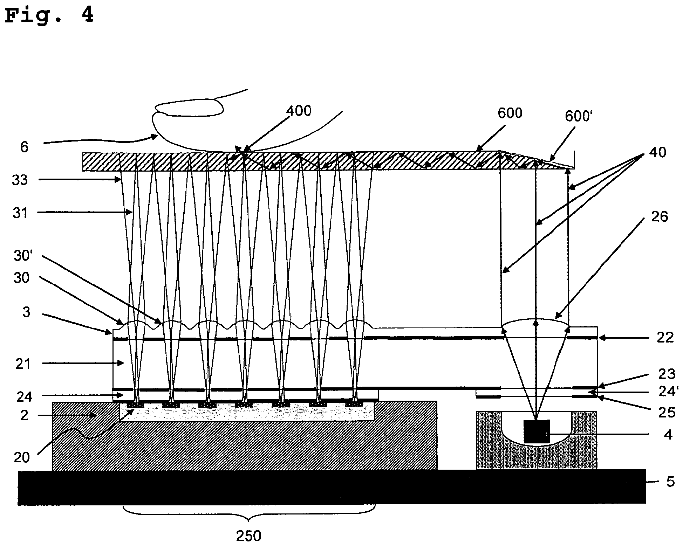

In der Ausführungsform nach Fig. 4 dient das optisch, transparente Schutzglas 600 gleichzeitig als Lichtleiter. Dabei wird das Beleuchtungslicht aus der(den) Quelle(n) 4 durch die Strahlformungsoptik 26, evtl. im Zusammenspiel mit der zweiten Strahlformungsoptik 24', auf die angeschliffene und verspiegelte Frontseite des Schutzglases 600' gelenkt. Dort werden die Lichtstrahlen 40 in eine Richtung senkrecht zu den optischen Achsen der Abbildungskanäle auf die Tracking-Surface 6 (hier der menschliche Finger) hin umgelenkt. Das Licht wird innerhalb des Schutzglases 600 durch Totalreflexion an der Ober- und Unterseite desselben geführt, bis diese durch den Kontakt des menschlichen Fingers oder des Trackingobjekts mit dem Schutzglas am Punkt 400 gestört wird. An der Stelle der gestörten Totalreflexion 400 tritt im Objektfeld ein Helligkeitsunterschied im Gegensatz zum beleuchteten, lateralen Umfeld ein, der im Bild durch den mehrkanaligen Abbildungsstrang erfasst wird. Die laterale Verschiebung dieses Helligkeitsunterschiedes zwischen den nacheinander aufgenommenen Bildern liefert die Verschiebung des Fingers bzw. des Trackingobjekts und kann in die Bewegung eines Cursors (u.a.) umgewandelt werden.

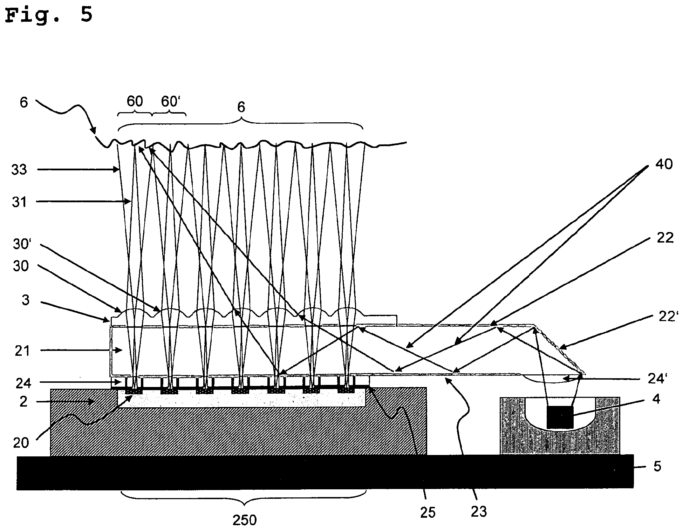

Die Ausführungsform nach Fig. 5 benutzt dasselbe Mikrolinsenarray 3 als Beleuchtungs- und Abbildungsoptik, d.h. das Element 3 und das Element 26 fallen zusammen). Hierfür sind die Aperturblendenanordnung 22 sowie die Blendenanordnung 23 zumindest einseitig für das Beleuchtungslicht 40 reflektierend ausgebildet, d.h. sie bestehen bevorzugt aus Metall, insbesondere Chrom oder Titan.

Das Licht der Beleuchtungsquelle 4 wird über den Abstandshalter oder eine dort befindliche Strahlformungsoptik 24', z.B. refraktive oder diffraktive Linse(n) in den optisch transparenten Träger 21 eingekoppelt. Die im schrägen Winkel zur Normalen auf dem Träger 5 verlaufende, metallisierte Schicht 22' lenkt das Beleuchtungslicht um, so dass es zwischen den reflektierenden Schichten 22 und 23 sowie der metallisierten Berandung des optisch transparenten Trägers 21 hin und her reflektiert wird. Die Reflexion des Beleuchtungslichtes 40 kann durch direkte Spiegelung an der metallisierten Blendenseite der reflektierenden Schichten 22, 23 und/oder durch Totalreflexion zumindest an der reflektierenden Schicht 22 (oder 22' wenn diese Schicht nicht metallisiert ist) geschehen. Die Blendenschichten 22, 23 besitzen trotz ihrer lokal reflektierenden Eigenschaften transparente Öffnungen innerhalb des Blendenrandes, z.B. unter einer Mikrolinse 30, 30'. Ferner kann die Schicht der Aperturblendenanordnung 22 auch objektseitig (oben) absorbierend, z.B. aus einem Black-Matrix-Polymer, und bildseitig (unten) reflektierend, z.B. aus einem Metall, ausgeprägt sein. Umgekehrt kann die Blendenanordnung 23 objektseitig (oben) reflektierend, z.B. aus einem Metall, und bildseitig (unten) absorbierend, z.B. aus einem Black-Matrix-Polymer, ausgeprägt sein. Beides dient dem Zweck einerseits Störlicht zu absorbieren, bevor es die Detektoren erreicht, aber andererseits nutzbares Beleuchtungslicht zu reflektieren, damit es auf die Tracking-Surface 6 gelangt.

Der Winkel von 22', die optionale Strahlformungsoptik 24', die Dicke des optisch transparenten Trägers 21 sowie die Größe der Öffnungen der Aperturblendenanordnung 22 und der Blendenanordnung 23 sind so beschaffen, dass einerseits möglichst viel Beleuchtungslicht 40 objektseitig durch das Mikrolinsenarray 3 auf die Tracking-Surface 6 abgebildet wird und andererseits möglichst wenig Beleuchtungslicht 40 direkt auf die Detektoren 20 fällt. Um Letzteres zu unterstützen, kann die Abstandshalterschicht 24 als eine Anordnung von multiplen Abstandshaltern, mit einer jeweiligen Grundfläche die zwischen der Größe der Linsenapertur und der Größe der photoaktiven Detektorpixelfläche liegt, ausgeprägt sein. Die Zwischenräume zwischen benachbarten Abstandshaltern können dann zusätzlich mit einem absorbierenden Polymer, z.B. einem Black-Matrix-Polymer, aufgefüllt sein (senkrechte optische Isolation).

Charakteristisch kommt es bei dieser Anordnung zu einer mehrkanaligen Beleuchtung mit großen Einfallswinkeln zur Tracking-Surface, so dass die Anordnung bevorzugt (aber nicht notwendigerweise) in Verbindung mit einer kohärenten Lichtquelle, z.B. einer Laserdiode, verwendet wird.

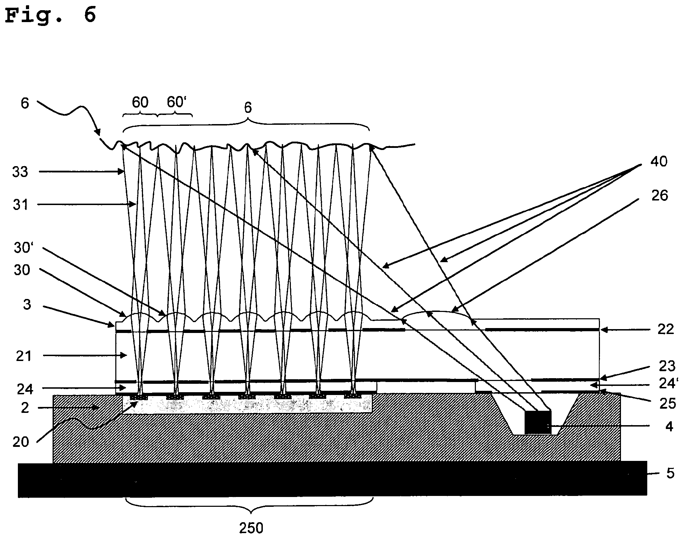

In der Ausführungsform nach Fig. 6 sind die Lichtquelle 4 sowie deren elektrische Stromversorgung und zugehörige Regelschaltkreise direkt auf dem Halbleitermaterial des Bildsensors 2 integriert. Dafür können schon im Bildsensordesign entsprechende elektrische Kontakte und Leiterbahnen eingeplant und im CMOS-Prozess der Bildsensorherstellung integriert werden (entspricht einem anwendungsspezifischen integrierten Schaltkreis, kurz ASIC). Nach der Herstellung des Bildsensors werden dann Vertiefungen in das Halbleitersubstrat, z.B. durch isotropes oder anisotropes Ätzen oder Mikrozerspanung, eingebracht, in denen dann die Quelle positioniert wird. Dadurch entsteht ein auch lateral sehr kompakter Aufbau des gesamten optischen Navigationssensors.

Die in das Halbleitermaterial eingebrachte Vertiefung kann optional, z.B. durch Glättung oder nachträglicher Metallisierung, die Funktion einer Reflektoroptik übernehmen. Durch die Wahl eines geeigneten Bearbeitungsprozesses (gemeint ist die Erzeugung der Vertiefung durch anisotropes und/oder isotropes Ätzen) kann ein spezielles Profil der Reflektorfläche eingestellt werden, welches im Zusammenwirken mit der Beleuchtungsoptik 26 und evtl. 24' eine verbesserte Beleuchtung der Tracking-Surface 6 gestattet.

Die optische Anordnung kann dann z.B. durch Bonden oder UV-Kleben direkt auf dem Halbleitersubstratausschnitt angebracht werden. Die Funktion des optischen Aufbaus ist analog zu der Beschreibung von Fig. 1.

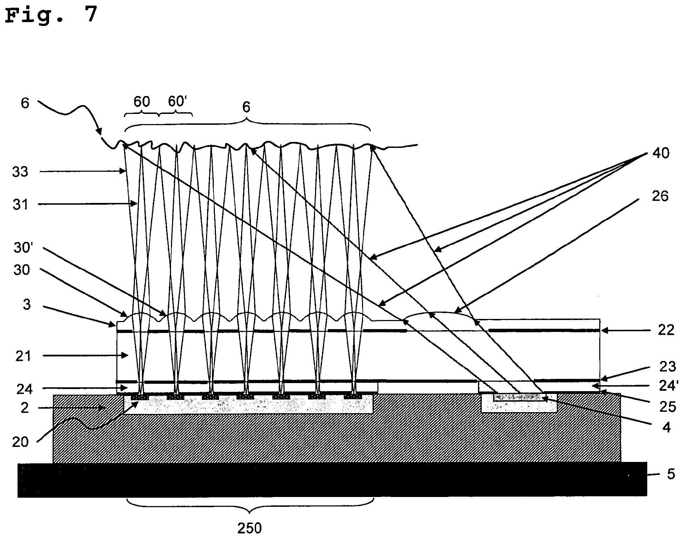

Eine weitere Ausführungsform nach Fig. 7 benutzt direkt auf dem Halbleitermaterial strukturierte Lichtquellen, z.B. anorganische LEDs oder organische LEDs (kurz OLEDs). Diese Ausführungsform zeigt die Verwendung einer OLED-basierten strukturierten Lichtquelle mit integrierten Photodetektoren auf einem CMOS-Trägersubstrat (auch bekannt als: "OLED-on-CMOS" oder "bidirektionale Mikrodisplays"). Dabei werden Organische LED(s) als schichtartige Lichtquelle(n), z.B. durch Aufdampfen, direkt auf dem Halbleitermaterial integriert und durch elektrische Kontakte aus den CMOS-Schaltkreisen betrieben. Diese Lösung stellt eine monolithische Verbindung der Detektoreneinheiten mit den Lichtquellen auf einem Halbleitersubstrat dar.

Vereinfacht beschrieben werden hierfür spezielle elektrische Kontakte mit innerhalb der CMOS-Prozesskette (Design und Herstellung) integriert, auf die dann eine spezielle Metallschicht als oberste Lage ("top metal") aufgebracht wird. Diese Schicht dient als untere Elektrode für die im Folgenden darauf abgeschiedenen OLED-Materialien und gibt somit die Größe einer leuchtenden Quellfläche vor. Diese werden durch eine weitere transparente Elektrodenschicht bedeckt und schließlich verkapselt.

Entsprechende Kompensationsschichten auf dem Bildsensor sorgen dafür, dass keine chemische oder mechanische Mikrobearbeitung des Halbleitermaterials, wie in Fig. 6, notwendig ist.

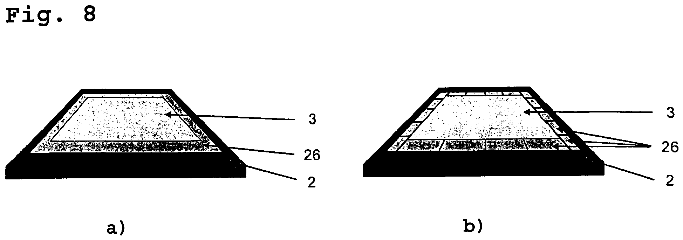

Ein weiterer Vorteil der technischen Realisierung in Verbindung mit organischen LEDs ist die Möglichkeit, die Beleuchtung über eine ausgedehnte Fläche zu gewährleisten. Eine entsprechende Anordnung ist in schräger Aufsicht in Fig. 8 (links) gezeigt. Um möglichst allseitig einen schrägen Einfallswinkel des Beleuchtungslichtes 40 zu gewährleisten (verstärkt Kontrast der Streuung an der Mikrostruktur der Tracking-Surface bei inkohärenter Quelle, ähnlich Dunkelfeldbeleuchtung im Mikroskop), kann die Quelle und somit auch die Strahlformungsoptik 26, wie in Fig. 8 gezeigt, rahmen- oder ringförmig ausgebildet sein. Andererseits kann die OLED-Quelle in Fig. 8 (rechts) auch strukturiert sein, z.B. wäre es von Vorteil jede Seite des Beleuchtungsrahmens bzw. einzelne Teile davon einzeln ansteuern zu können. So kann das Objekt u.U. sequentiell nacheinander immer nur von einer Seite beleuchtet werden. Die vier entstehenden Bilder mit Beleuchtung aus vier verschiedenen Richtungen können bezüglich Bildkontrast verglichen bzw. gewichtet werden, um die Genauigkeit der Messung der Relativbewegung zu verbessern.

Da ein Beleuchtungsschema mit von allen Seiten gleichzeitig in flachem Winkel einfallendem Licht bei einer inkohärenten Lichtquelle, z.B. Ringbeleuchtung im Dunkelfeldmodus eines Mikroskops, einer lichtempfindlichen Abbildungsoptik mit langer Belichtungszeit und somit geringer Bildwiederholungsrate bedarf, ist dieses Schema für einen sehr schnellen optischen Navigationssensor (z.B. Maussensor) ungeeignet. Aus diesem Grund können die Quellen seitenweise verzögert die Tracking-Surface 6 beleuchten, so dass in zwei aufeinander folgenden Bildern jeweils nur einseitig beleuchtet wird. Dafür bedarf es einer entsprechend schnellen (elektrischen) Modulation der Lichtquellen. Die mehrfache Erfassung der Relativbewegung mit verschiedenen Beleuchtungsrichtungen erhöht die Detektionssicherheit vor allem im Falle einer richtungsabhängigen Mikrostruktur der Tracking-Surface 6.

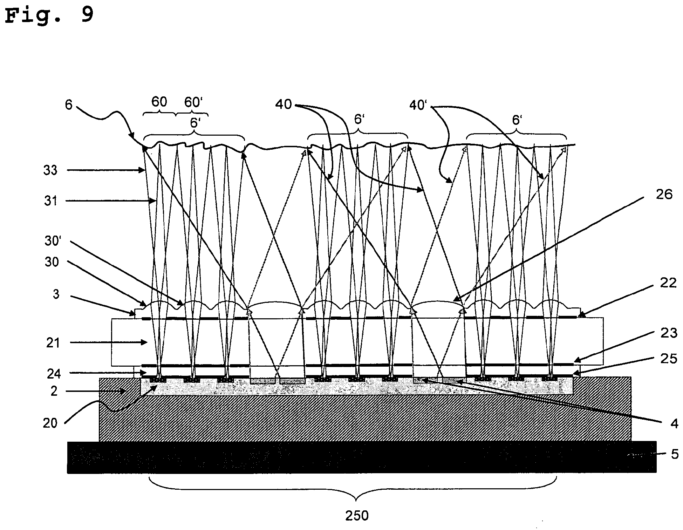

Die in Fig. 9 gezeigte Ausführungsform grenzt sich von den übrigen dadurch ab, dass multiple, flächig-ausgeprägte Lichtquellen (OLEDs) in Zwischenpositionen innerhalb des Detektorenarrays strukturiert sind (Faltung von Detektorenarray des Bildsensors und Lichtquellenanordnung). In jeder Zwischenposition können sich einzelne Quellen und/oder Arrays von Quellen 4 befinden. Durch einen Versatz der Zentren der einzelnen Lichtquellen 4 zum Zentrum (bzw. den Zentren) der strahlformenden Optik 26 wird ein schräger Beleuchtungswinkel auf die von den Mikrolinsen 3, 30, 30' beobachteten Bereiche der Tracking-Surface 6' realisiert. Durch eine geeignete Beleuchtungsoptik 26 kann z.B. das Licht der jeweils rechten Quelle 40 zur Beleuchtung des jeweils linken und das Licht der jeweils linken Quelle 40' zur Beleuchtung des jeweils rechten Bereiches der Tracking-Surface 6' verwendet werden. Zwar wird die Tracking-Surface in der gezeigten Anordnung nicht lückenlos abgetastet, dennoch wird durch eine geringe Anzahl von Kanälen pro Abtastbereich 6' ein kleines Teilbild erzeugt, so dass die Bewegung relativ zur Tracking-Surface durch die zeitliche Korrelation der Teilbilder oder andere Auswertverfahren, wie z.B. der Extraktion von optischem Fluss, geschehen kann.

Bei der Verwendung der inkohärenten OLED-Lichtquellen ist eine entsprechende Beleuchtung mit schrägem Einfallswinkel zur Tracking-Surface anzustreben, um einen möglichst großen Kontrast des an der Mikrostruktur gestreuten Beleuchtungslichts zu erhalten.

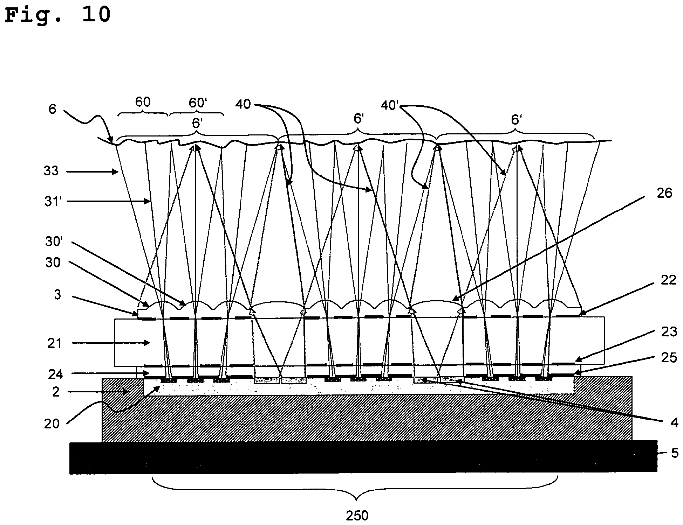

Fig. 10 soll die Verwendung von zueinander geneigten optischen Achsen 31' der benachbarten abbildenden Kanäle verdeutlichen. Um dies zu erreichen, nimmt der Mittenabstand der Einzelelemente (Mikrolinse, Aperturblende, Blende usw.) im Array von der Bildebene aus stetig zu. D.h. der Mittenabstand benachbarter Detektorelemente 20 ist kleiner als der Mittenabstand der Blenden des Abbildungsstranges der Blendenanordnung 23. Dieser ist wiederum kleiner als der Mittenabstand der Aperturblenden 22 und dieser ist schließlich kleiner als der Mittenabstand der Mikrolinsen 30 und 30'. Die axiale Variation der Mittenabstände ist so ausgeführt, dass die von jedem Array von zusammenhängenden Abbildungskanälen beobachteten Teilstücke der Tracking-Surface 6' aneinander anschließen und somit eine lückenlose Abtastung der Letzten entsteht. Die Verwendung von zueinander geneigten optischen Achsen der Abbildungskanäle kann auch in den Figuren 1 bis 6 Verwendung finden, um einen Bereich der Tracking-Surface 6 abzubilden, der lateral größer ist als der Bildsensor bzw. die Detektorenanordnung 20.

In der Anordnung werden multiple, flächig-ausgeprägte Lichtquellen (OLEDs) in Zwischenpositionen innerhalb des Detektorenarrays strukturiert (Faltung von Detektorenarray des Bildsensors und Lichtquellenanordnung). In jeder Zwischenposition können sich wieder einzelne Quellen und/oder Arrays von Quellen 4 befinden. Die Beleuchtungsoptik 26 ist so beschaffen, dass die von den Lichtquellen 4 mit einem gegebenem Winkelspektrum emittierte Strahlung durch 26 auf einen Bereich, der genauso groß ist wie der von einem Segment des Mikrolinsenarrays beobachtete Bereich der Tracking-Surface 6', möglichst homogen verteilt wird. Der durch eine Quellenanordnung 4 beleuchtete Bereich der Tracking-Surface kann dabei gegen den von einem Segment des Mikrolinsenarrays beobachteten Bereich der TrackingSurface 6' um den halben Durchmesser lateral verschoben sein. Eine lückenlose Beleuchtung der ausgedehnten Tracking-Surface 6 ist durch das Anknüpfen der Beleuchtungsfelder der benachbarten Quellenanordnungen 4 gewährleistet.

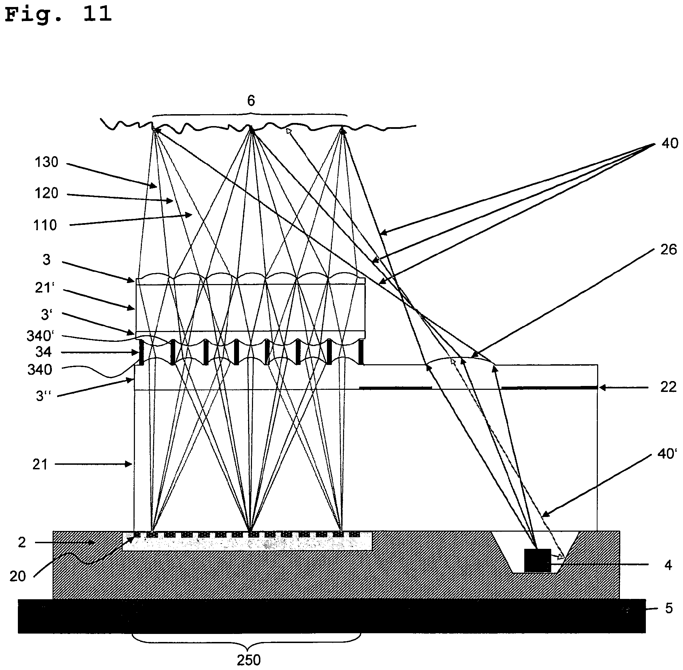

Eine weitere Ausführungsform zeigt Fig. 11. Zur Erhöhung der Lichtempfindlichkeit soll speziell auch die Verwendung mehrerer (dicht gepackter) Detektorpixel innerhalb des Fußabdrucks der Mikrolinsen erlaubt sein. Dafür sind Gruppen von Pixeln mit kleinem Mittenabstand im Fußabdruck der einzelnen Mikrolinsen nötig, wobei die Gruppenzentren einen deutlich größeren Mittenabstand (vergleichbar mit denen der Mikrolinsen) aufweisen.

In dieser Ausführung wird in jedem Einzelkanal nicht nur ein Pixel, sondern ein aus wenigen Pixeln bestehendes, gering-aufgelöstes, seitenverkehrtes und auf dem Kopf stehendes Bild ausgelesen. Um aus den vielen pro Kanal erhaltenen Teilbildern ein Gesamtbild zu machen, muss jedes Teilbild an seinen Hauptachsen (x, y) gespiegelt werden. Dies kann hardwarenah in derselben logischen Schaltung oder einem Signalprozessor (z.B. ASIC, FPGA) geschehen, in dem auch die Berechnung der Relativverschiebung anhand der Korrelation der nacheinander aufgenommenen Gesamtbilder des Sensors stattfindet.

In dieser Ausführungsform ist es vorteilhaft, die Unterdrückung von optischem Übersprechen durch senkrechte Trennwände, die zumindest teilweise durch den axialen Zwischenraum zwischen den einzelnen Kanälen verlaufen, zu gewährleisten. Der Grund dafür: Die zuvor beschriebenen horizontalen Blendenlagen müssten bei der Aufnahme eines kleinen Bildes pro Kanal einen größeren Durchmesser für die einzelnen Öffnungen aufweisen, was einer Blockung der Bündel des optischen Übersprechens, die in schrägem Winkel durch das System laufen, entgegen wirkt.

Axial (zumindest teilweise) senkrecht verlaufende Trennwände werden dadurch erreicht, dass der optisch transparente Träger durch einen deutlich dünneren optisch transparenten Träger ersetzt wird auf dessen Rückseite axial dicke/tiefe Abstandshalterpodeste bzw. -säulen aus Polymer, z.B. SU8, oder Kunststoff abgeformt sind. Die zwischen den Abstandshalterpodeste bzw. -säulen befindlichen Gräben sind mit einem absorbierenden Material, z.B. einem Black-Matrix-Polymer, verfüllt.

Der laterale Teil des Trägers, auf dem sich die Beleuchtungsoptik befindet, kann in diesem Fall ebenso beschaffen sein, wobei hier nur eine äußere senkrechte Trennwand nötig ist, die zur Abschirmung des Abbildungsteils vom direkten eingestrahlten Licht der Quelle dient. Das Podest wird also an dieser Stelle mit einer lateralen Ausdehnung erzeugt, die der maximalen Ausdehnung des Beleuchtungsstrahlengangs entspricht.

Auf der Rückseite dieses Schichtaufbaus kann sich (zur Erhöhung der Auflösung im Falle relativ großer Detektorpixel) wieder die Blendenanordnung mit den schon genannten Eigenschaften befinden.

Weitere Ausführungsformen ergeben sich durch die Verwendung einer zweiten Anordnung für die mehrkanalige Abbildungsoptik, in welcher mindestens zwei, vorteilhafterweise drei Mikrolinsenarrays, axial hintereinander gestellt sind. Vorteil dieser Anordnung ist die erhöhte Lichtempfindlichkeit des Abbildungsstranges, welche durch die gezielte, bildseitige Überlagerung einzelner Lichtbündel aus dem Objektraum 110, 120, 130) (Superposition) erreicht wird. Dadurch erhöht sich die Baulänge des optischen Navigationssensors, so dass das System nicht mehr die axiale Länge kleiner 2 mm, sondern eine axiale Länge < 3 mm, von der Oberkante des Bildsensors 2 bis zur Tracking-Surface 6 aufweist.

In Fig. 11 ist die bereits von Fig. 6 bekannte Anordnung des Abbildungsstranges durch ein mehrkanaliges Mikroobjektiv mit drei hintereinander liegenden Mikrolinsenarrays ersetzt. Eine einzelne einkanalige oder mehrkanalige Beleuchtungsoptik 26 wird verwendet, um das Licht 40 der auf dem Halbleitersubstrat 2 integrierten Lichtquelle 4 auf dem beobachteten Bereich der Tracking-Surface 6 zu verteilen. Die Beleuchtungsoptik 26 kann hier wieder refraktiv und/oder diffraktiv und/oder reflektiv wirken. Optional kann dafür zusätzlich die Vertiefung im Halbleitermaterial 2, in der die Lichtquelle 4 montiert ist, als Reflektor ausgeprägt sein. Somit wird auch in großem Winkel zur Seite abgestrahltes Licht der Quelle 4 für die Beleuchtung der Tracking-Surface 6 nutzbar (siehe Strahlengang von 40'). Letzteres ist vor allem bei der Verwendung von LEDs als Lichtquellen sinnvoll.

Die Aperturblendenanordnung 22 ist in diesem Fall einzig beleuchtungsseitig ausgeprägt, um zu verhindern, dass direktes Beleuchtungslicht schräg in die Abbildungsoptik und dann in Richtung des Bildsensorarrays 20 gelangt.

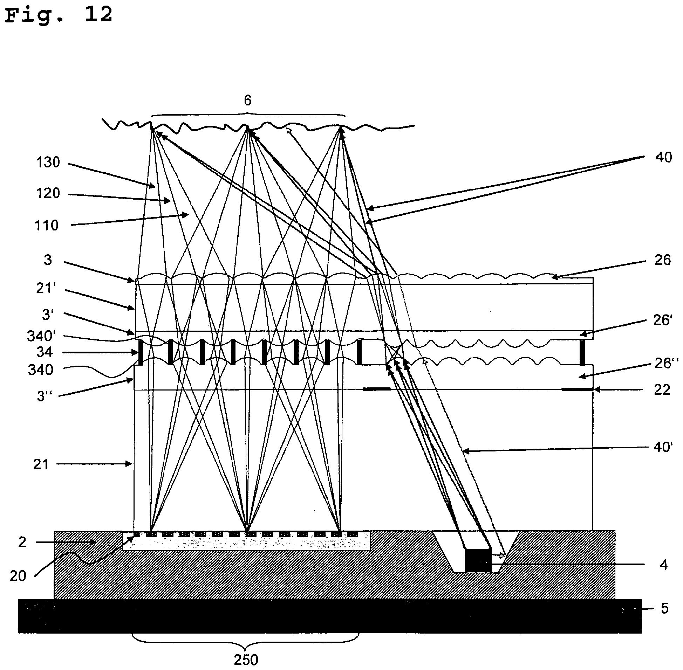

Eine weitere Ausführungsform nach Fig. 12 benutzt auch beleuchtungsseitig mindestens zwei (bzw. drei) hintereinander liegende einzelkanalige bzw. mehrkanalige Strahlformungsoptiken 26, 26' 26". Im Falle von axial gestapelten mehrkanaligen Strahlformungsoptiken, z.B. Mikrolinsenarrays, sind die einzelnen Anordnungen 26, 26' oder 26" mit zunehmendem Abstand von der Lichtquelle 4 gegenüber dieser in Richtung der Mitte der zu beleuchtenden Tracking-Surface 6 versetzt. Dieser Versatz ist notwendig, um eine entsprechende Ablenkung der Beleuchtungsstrahlen 40, 40' zur Tracking-Surface 6 hin zu gewährleisten. Durch die Verwendung einer Mehrzahl von Kanälen wird gleichzeitig eine Homogenisierung der Beleuchtungsstrahlung bei möglichst kompakter Bauform erzielt. Die von jeder Mikrolinse des objektseitigen Arrays 26 ausgehenden, divergenten Bündel überlagern sich auf der Tracking-Surface 6, so dass die Vielzahl der überlappenden Lichtfelder eine homogene Lichtverteilung erzeugt.

Die Mikrolinsenarrays 26, 26' und 26" können sich untereinander und auch im Vergleich zu den abbildenden Mikrolinsenarrays 3, 3' und 3" in mindestens einer Eigenschaft unterscheiden.

Die lichtundurchlässige Abstandshalterschicht 34 dient im Abbildungsstrang zur Verhinderung von optischem Übersprechen und ist im Beleuchtungsstrahlengang nicht nötig, so dass im Beleuchtungsstrang nur am lateralen Rand der Träger 21' und 21 eine lichtundurchlässige Abstandshaltersäule (340) als mechanischer Auflagerahmen für den optisch transparenten Träger 21' und die darauf auf Front- und Rückseite befindlichen Mikrolinsen 26, 26' notwendig ist.

Die Aperturblendenanordnung 22 ist hier wieder nur beleuchtungsseitig ausgeprägt, um zu verhindern, dass direktes Beleuchtungslicht schräg in die Abbildungsoptik und dann in Richtung des Bildsensorarrays 20 gelangt.

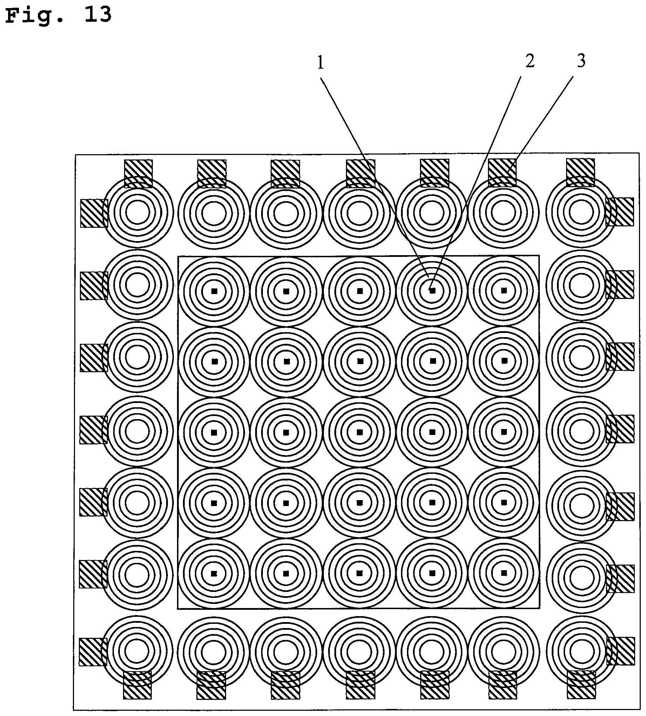

Die in Fig. 13 dargestellte Aufsicht betrifft die Ausführungsformen gemäß den Figuren 7 bis 9. Die hier dargestellten Höhenprofile der Mikrolinsen 1 sind jeweils durch konzentrische Kreise dargestellt. Im vorliegenden Fall sind die Mikrolinsen für die Abbildung auf dem jeweiligen Sensorpixel gleich groß wie jene der Strahlformungsoptik. Weiterhin weist die erfindungsgemäße Vorrichtung Detektorpixel 2 und unabhängig voneinander ansteuerbare Strahlungsquellen 3, z.B. OLED-Pixel auf. Letztere sind ebenfalls auf der Detektorebene unterhalb der Mikrolinsenebene angeordnet. Der Versatz der Zentren der Mikrolinsen der Strahlformungsoptik erzielt einen schrägen Einfallswinkel des Lichts der Quellen durch diese auf die Tracking-Fläche.

## Patentansprüche

1. Vorrichtung zur optischen Navigation, hergestellt in Wafer-Technologie, mit
a) einem Bildsensorarray (2) mit einer Vielzahl von arrayartig angeordneten Bildsensoreinheiten (20) mit jeweils mindestens einer lichtempfindlichen Fläche,
b) mindestens einem dem Bildsensorarray (2) zugeordneten und zwischen einem abzubildenden Objekt (6) und dem Bildsensorarray (2) angeordneten Mikrolinsenarray (3, 3', 3"), wobei jeder Bildsensoreinheit (20) mindestens eine Mikrolinse (30, 30') zugeordnet ist sowie
c) mindestens eine Strahlungsquelle (4) mit mindestens einer zugehörigen Strahlformungsoptik (26),
**dadurch gekennzeichnet, dass**
das Bildsensorarray (2) und die mindestens eine Strahlungsquelle (4) gemeinsam auf derselben Trägerstruktur (5) sowie mindestens ein Mikrolinsenarray (3, 3', 3") und mindestens eine Strahlformungsoptik (26) gemeinsam auf demselben optisch transparenten Substrat (21) angeordnet sind,
wobei mindestens eine Aperturblendenlage (22), die aus einem absorbierenden oder einem zumindest einseitig reflektierenden Material besteht, zwischen dem optisch transparenten Substrat (21) und dem Mikrolinsenarray (3, 3', 3") bzw. der Strahlformungsoptik (26) angeordnet ist, wobei die Aperturblendenlage (22) im Bereich des Mikrolinsenarrays (3, 3', 3") das Eindringen von Strahlung zwischen den Mikrolinsen (30, 30') des Mikrolinsenarrays (3, 3', 3") verhindert und im Bereich der Strahlformungsoptik (26) eine Einschränkung des Abstrahlwinkels der aus der Strahlungsquelle (4) austretenden Strahlung ermöglicht, und
wobei auf der dem Mikrolinsenarray (3, 3', 3") abgewandten Seite des optisch transparenten Substrats (21) mindestens eine Blendenlage (23) angeordnet ist, die aus einem absorbierenden oder einem zumindest einseitig reflektierenden Material besteht, wobei die mindestens eine Blendenlage (23) im Bereich des Mikrolinsenarrays (3, 3', 3") ein optisches Übersprechen zwischen einzelnen optischen Kanälen des Bildsensorarrays (2) unterdrückt und im Bereich der Strahlformungsoptik (26) verhindert, dass Strahlung der Strahlungsquelle (4) unmittelbar auf lichtempfindliche Flächen der Bildsensoreinheiten (20) gelangt.

2. Vorrichtung nach Anspruch 1, **dadurch gekennzeichnet, dass** die Trägerstruktur (5) eine Leiterplatte und/oder ein Halbleitersubstrat ist.

3. Vorrichtung nach einem der vorhergehenden Ansprüche, **dadurch gekennzeichnet, dass** die Strahlungsquelle (4) ausgewählt ist aus der Gruppe bestehend aus Leuchtdioden, organische Leuchtdioden, Laserdioden oder Kombinationen hiervon, wobei die Strahlungsquellen vorzugsweise unabhängig voneinander elektrisch ansteuerbar sind.

4. Vorrichtung nach Anspruch 3, **dadurch gekennzeichnet, dass** anorganische oder organische Leuchtdioden als schichtartige Strahlungsquelle(n) auf dem Halbleitersubstrat des Bildsensors integriert ist (sind) und ihre elektrischen Ansteuerungsschaltkreise durch die CMOS-Technologie des Bildsensors bereitgestellt werden.

5. Vorrichtung nach einem der vorhergehenden Ansprüche, **dadurch gekennzeichnet, dass** durch die Strahlformungsoptik (26) eine homogene Verteilung der Strahlung der Strahlungsquelle (4) auf das abzubildende Objekt durch Refraktion, Diffraktion, Reflexion und/oder frustrierte Totalreflexion erfolgt, wobei die Strahlformungsoptik (26) vorzugsweise mehrere optische Kanäle aufweist, die insbesondere arrayartig aufgebaut sind.

6. Vorrichtung nach einem der vorhergehenden Ansprüche, **dadurch gekennzeichnet, dass** die Mikrolinsen (30, 30') derart zur jeweilig zugehörigen Bildsensoreinheit ausgerichtet sind, dass die Verbindungslinien zwischen Linsenscheitelpunkt und der Mitte der jeweilig zugehörigen Bildsensoreinheit zwischen benachbarten optischen Kanälen parallel verlaufen oder die Mikrolinsen (30, 30') derart zur jeweilig zugehörigen Bildsensoreinheit ausgerichtet sind, dass die Verbindungslinien zwischen Linsenscheitelpunkt und der Mitte der jeweilig zugehörigen Bildsensoreinheit im Zentrum des Bildsensorarrays (2) senkrecht auf der mindestens einen zugeordneten lichtempfindlichen Fläche stehen und vom Zentrum zu einem Rand hin die optischen Achsen der Mikrolinsen zunehmend schräg auf der zugeordneten lichtempfindlichen Fläche stehen.

7. Vorrichtung nach einem der vorhergehenden Ansprüche, **dadurch gekennzeichnet, dass** mindestens eine Mikrolinse (30, 30') mindestens einen Teil der Strahlformungsoptik (26) darstellt, wobei auch die abbildende Funktion der Mikrolinse erhalten bleibt.

8. Vorrichtung nach einem der vorhergehenden Ansprüche, **dadurch gekennzeichnet, dass** die Mikrolinsen (30) derart ausgebildet sind, dass ein auf einer ersten Bildsensoreinheit abgebildeter Objektausschnitt (60) von einem auf einer zweiten Bildsensoreinheit abgebildeten Objektausschnitt (60') disjunkt ist.

9. Vorrichtung nach einem der vorhergehenden Ansprüche, **dadurch gekennzeichnet, dass** eine Bildsensoreinheit (20) genau eine lichtempfindliche Fläche aufweist und genau einer Mikrolinse (30) zugeordnet ist, wobei die optische Achse im Wesentlichen senkrecht auf der lichtempfindlichen Fläche steht.

10. Vorrichtung zur optischen Navigation nach einem der vorhergehenden Ansprüche, **dadurch gekennzeichnet, dass** das mindestens eine Mikrolinsenarray (3, 3',3") bzw. die Strahlformungsoptik (26) zumindest bereichsweise über Abstandshalter mit dem Bildsensorarray (2) verbunden sind.

11. Vorrichtung nach einem der vorhergehenden Ansprüche, **dadurch gekennzeichnet, dass** auf der vom Bildsensorarray (2) abgewandten Seite des Mikrolinsenarrays (3, 3', 3") mindestens eine optisch transparente Schutzscheibe, insbesondere bestehend aus Glas oder einem optisch transparenten Polymer, angeordnet ist, wobei vorzugsweise die Schutzscheibe durch interne Totalreflexion als Lichtleiter fungiert.

12. Vorrichtung zur optischen Navigation nach einem der vorhergehenden Ansprüche, **dadurch gekennzeichnet, dass** das Bildsensorarray (2) eine Flächenausdehnung von 0,25 µm² bis 10 mm² besitzt und/oder von 100 bis 10.000, insbesondere von 100 bis 1.000 Bildsensoreinheiten aufweist.

13. Eingabegerät für eine Datenverarbeitungsanlage, insbesondere portable Systeme wie Mobiltelefone, PDA's, Laptop oder Handheld, vorzugsweise eine Computermaus, eine Fernbedienung oder eine Konsolensteuerungsvorrichtung, **dadurch gekennzeichnet, dass** eine Vorrichtung zur optischen Navigation nach einem der vorhergehenden Ansprüche vorhanden ist.

14. Verwendung einer Vorrichtung zur optischen Navigation nach einem der Ansprüche 1 bis 12 zur Steuerung eines Cursors auf einem Bildausgabegerät mittels einer relativen Bewegung zwischen Bildsensor und abzubildendem Objekt oder im Bereich der Fingernavigation.

## Claims

1. Optical navigation device, produced by wafer technology having
a) an image sensor array (2) having a large number of image sensor units (20) disposed in an array, having respectively at least one light-sensitive surface,
b) at least one microlens array (3, 3' 3") which is assigned to the image sensor array (2) and disposed between an object (6) to be imaged and the image sensor array (2), at least one microlens (30, 30') being assigned to each image sensor unit and also
c) at least one radiation source (4) having at least one associated beam-forming lens system (26),
**characterised in that**
the image sensor array (2) and the at least one radiation source (4) are disposed together on the same carrier structure (5) and also at least one microlens array (3, 3', 3") and at least one beam-forming leans system (26) are disposed together on the same optically transparent substrate (21),
wherein at least one aperture diaphragm layer (22), which consists of an absorbing material or a material which is reflecting at least on one side, is disposed between the optically transparent substrate (21) and microlens array (3, 3', 3") or beam-forming lens system (26), wherein the aperture diaphragm layer, in the region of the microlens array (3, 3', 3"), prevents penetration of radiation between the microlenses (30, 30') of the microlens array (3, 3', 3") and, in the region of the beam-forming lens system (26), enables restriction of the angle of radiation of the radiation emanating from the radiation source (4), and
wherein at least one diaphragm layer (23), which consists of an absorbing material or a material which is reflecting at least on one side, is disposed on the side of the optically transparent substrate (21) which is orientated away from the microlens array (3, 3', 3"), wherein the at least one diaphragm layer (23) suppresses, in the region of the microlens array (3, 3', 3"), optical crosstalk between the individual optical channels of the image sensor array (2) and, in the region of the beam-forming lens system (26), prevents radiation of the radiation source (4) directly reaching the light-sensitive surfaces of the image sensor units (20).

2. Device according to claim 1, **characterised in that** the carrier structure (5) is a printed circuit board and/or a semiconductor substrate.

3. Device according to one of the preceding claims, **characterised in that** the radiation source (4) is selected from the group consisting of light diodes, organic light diodes, laser diodes or combinations hereof, wherein the radiation sources can preferably be actuated electrically independently of each other.

4. Device according to claim 3, **characterised in that** inorganic or organic light diodes is (are) integrated as layer-like radiation source(s) on the semiconductor substrate of the image sensor and their electrical actuation circuits are provided by the CMOS technology of the image sensor.

5. Device according to one of the preceding claims, **characterised in that** a homogeneous distribution of the radiation of the radiation source (4) on the object to be imaged by refraction, diffraction, reflection and/or frustrated total reflection is effected by the beam-forming lens system (26), wherein the beam-forming lens system (26) preferably has a plurality of optical channels which are constructed in particular in the manner of an array.

6. Device according to one of the preceding claims, **characterised in that** the microlenses (30, 30') are orientated relative to the respectively associated image sensor unit such that the connection lines between lens apex and the centre of the respectively associated image sensor unit extend parallel between adjacent optical channels or the microlenses (30, 30') are orientated relative to the respectively associated image sensor unit such that the connection lines between lens apex and the centre of the respectively associated image sensor unit in the centre of the image sensor array (2) are perpendicular to the at least one assigned light-sensitive surface and, from the centre towards an edge, the optical axes of the microlenses are increasingly diagonal to the assigned light-sensitive surface

7. Device according to one of the preceding claims, **characterised in that** at least one microlens (30, 30') represents at least one part of the beam-forming lens system (26), also the imaging function of the microlens being maintained.

8. Device according to one of the preceding claims, **characterised in that** the microlenses (30) are configured such that an object section (60), imaged on a first image sensor unit, is not joined to an object section (60') imaged on a second image sensor unit.

9. Device according to one of the preceding claims, **characterised in that** an image sensor unit (20) has precisely one light-sensitive surface and is assigned precisely to one microlens (30), the optical axis being essentially perpendicular to the light-sensitive surface.

10. Optical navigation device according to one of the preceding claims, **characterised in that** the at least one microlens array (3, 3', 3") or the beam-forming lens system (26) are connected at least in regions via spacers to the image sensor array (2).

11. Device according to one of the preceding claims, **characterised in that** at least one optically transparent protective disc, in particular consisting of glass or an optically transparent polymer, is disposed on the side of the microlens array (3, 3', 3") orientated away from the image sensor array (2), wherein preferably, the protective disc acts as light guide by means of internal total reflection.

12. Optical navigation device according to one of the preceding claims, **characterised in that** the image sensor array (2) has a surface extension of 0.25 µm² to 10 mm² and/or has from 100 to 10,000, in particular from 100 to 1,000, image sensor units.

13. Input device for a data processing unit, in particular portable systems, such as mobile telephones, PDAs, laptop or handheld, preferably a computer mouse, a remote control or a console control device, **characterised in that** an optical navigation device according to one of the preceding claims is present.

14. Use of an optical navigation device according to one of the claims 1 to 12 for controlling a cursor on an image output device by means of a relative movement between image sensor and object to be imaged or in the field of finger navigation.

## Revendications

1. Dispositif de navigation optique, réalisé avec la technologie de wafers, avec
a) un groupement de capteurs d'image (2) avec une multiplicité d'unités de capteurs d'image (20) disposées en groupement avec respectivement au moins une surface photosensible,
b) au moins un groupement de microlentilles (3, 3', 3") affecté au groupement de capteurs d'image (2) et disposé entre un objet (6) à reproduire et le groupement de capteurs d'image (2), au moins une microlentille (30, 30') étant affectée à chaque unité de capteurs d'image (20), ainsi que
c) au moins une source de rayonnement (4) avec au moins une optique de mise en forme de faisceau (26) correspondante,
**caractérisé en ce que**
le groupement de capteurs d'image (2) et la source de rayonnement (4) au moins au nombre de un sont disposés conjointement sur la même structure porteuse (5), de même qu'au moins un groupement de microlentilles (3, 3', 3") et au moins une optique de mise en forme de faisceau (26) sont disposés conjointement sur le même substrat (21) optiquement transparent,
au moins une couche de diaphragme d'ouverture (22), qui se compose d'un matériau absorbant ou réfléchissant au moins sur un côté, est disposée entre le substrat (21) optiquement transparent et le groupement de microlentilles (3, 3', 3") ou respectivement l'optique de mise en forme de faisceau (26), la couche de diaphragme d'ouverture (22) empêchant, dans la zone du groupement de microlentilles (3, 3', 3"), l'intrusion du rayonnement entre les microlentilles (30, 30') du groupement de microlentilles (3, 3', 3") et, dans la zone de l'optique de mise en forme de faisceau (26), permet une restriction de l'angle de rayonnement du rayonnement sortant de la source de rayonnement (4) et,
sur le côté du substrat (21) optiquement transparent qui est éloigné du groupement de microlentilles (3, 3', 3"), il est disposé au moins une couche de diaphragme (23) qui se compose d'un matériau absorbant ou réfléchissant au moins sur un côté, la couche de diaphragme (23) au moins au nombre de un empêchant, dans la zone du groupement de microlentilles (3, 3', 3"), une diaphonie optique entre des canaux optiques individuels du groupement de capteurs d'image (2) et empêchant, dans la zone de l'optique de mise en forme de faisceau (26), que le rayonnement de la source de rayonnement (4) arrive directement sur des surfaces photosensibles des unités de capteurs d'image (20).

2. Dispositif selon la revendication 1, **caractérisé en ce que** la structure porteuse (5) est un circuit imprimé et/ou un substrat semi-conducteur.

3. Dispositif selon l'une des revendications précédentes, **caractérisé en ce que** la source de rayonnement (4) est sélectionnée dans le groupe composé de diodes lumineuses, de diodes lumineuses organiques, de diodes laser ou de combinaisons de celles-ci, les sources de rayonnement (4) pouvant être de préférence commandées électriquement indépendamment les unes des autres.

4. Dispositif selon la revendication 3, **caractérisé en ce que** des diodes lumineuses inorganiques ou organiques est (sont) intégrée(s) en tant que source(s) de rayonnement en couches sur le substrat semi-conducteur du capteur d'image, et leurs circuits de commande électriques sont fournis par la technologie CMOS du capteur d'image.

5. Dispositif selon l'une des revendications précédentes, **caractérisé en ce que**, du fait de l'optique de mise en forme de faisceau (26), une répartition homogène du rayonnement de la source de rayonnement (4) sur l'objet à reproduire est effectuée par réfraction, diffraction, réflexion et/ou réflexion totale frustrée, l'optique de mise en forme de faisceau (26) présentant de préférence plusieurs canaux optiques qui sont en particulier structurés en groupement.

6. Dispositif selon l'une des revendications précédentes, **caractérisé en ce que** les microlentilles (30, 30') sont orientées vers l'unité de capteurs d'image respectivement correspondante de telle sorte que les lignes de raccordement entre le point sommital de lentilles et le milieu de l'unité de capteurs d'image correspondante entre des canaux optiques adjacents sont parallèles, ou les microlentilles (30, 30') sont orientées vers l'unité de capteurs d'image respectivement correspondante de telle sorte que les lignes de raccordement entre le point sommital de lentilles et le milieu de l'unité de capteurs d'image correspondante au centre du groupement de capteurs d'image (2) sont perpendiculaires à la surface photosensible affectée au moins au nombre de un, et les axes optiques des microlentilles sont, à partir du centre vers un bord, placés de façon de plus en plus oblique sur la surface photosensible affectée.

7. Dispositif selon l'une des revendications précédentes, **caractérisé en ce qu'**au moins une microlentille (30, 30') représente au moins une partie de l'optique de mise en forme de faisceau (26), la fonction de représentation de la microlentille également étant préservée.

8. Dispositif selon l'une des revendications précédentes, **caractérisé en ce que** les microlentilles (30) sont constituées de telle sorte qu'un extrait d'objet (60) reproduit sur une première unité de capteurs d'image est disjoint d'un extrait d'objet (60') reproduit sur une deuxième unité de capteurs d'image.

9. Dispositif selon l'une des revendications précédentes, **caractérisé en ce qu'**une unité de capteurs d'image (20) présente précisément une surface photosensible et est affectée précisément à une microlentille (30), l'axe optique étant essentiellement perpendiculaire à la surface photosensible.

10. Dispositif de navigation optique selon l'une des revendications précédentes, **caractérisé en ce que** le groupement de microlentilles (3, 3', 3") au moins au nombre de un ou respectivement l'optique de mise en forme de faisceau (26) sont raccordés au moins par tronçons au groupement de capteurs d'image (2) par le biais de pièces d'espacement.

11. Dispositif selon l'une des revendications précédentes, **caractérisé en ce que**, sur le côté du groupement de microlentilles (3, 3', 3") éloigné du groupement de capteurs d'image (2), il est disposé au moins un écran de protection optiquement transparent, composé en particulier de verre ou d'un polymère optiquement transparent, l'écran de protection fonctionnant de préférence en tant que conduit de lumière par réflexion totale interne.

12. Dispositif de navigation optique selon l'une des revendications précédentes, **caractérisé en ce que** le groupement de capteurs d'image (2) possède une superficie de 0,25 µm² à 10 mm² et/ou présente de 100 à 10 000, en particulier de 100 à 1 000 unités de capteurs d'image.

13. Appareil d'entrée pour une installation de traitement de données, en particulier systèmes portables tels que téléphones mobiles, assistants personnels, ordinateurs portables ou ordinateurs de poche, de préférence une souris d'ordinateur, une télécommande ou un dispositif de commande de console, **caractérisé par** la présence d'un dispositif de navigation optique selon l'une des revendications précédentes.

14. Utilisation d'un dispositif de navigation optique selon l'une des revendications 1 à 12 pour la commande d'un curseur sur un appareil de sortie d'image au moyen d'un mouvement relatif entre le capteur d'image et l'objet à reproduire ou dans la zone de navigation au doigt.
